# EUROPÄISCHE PATENTSCHRIFT

(11) **EP 3 564 631 B1**
(45) Veröffentlichungstag und Bekanntmachung des Hinweises auf die Patenterteilung: **18.08.2021**
(21) Anmeldenummer: 19166655.1
(22) Anmeldetag: 01.04.2019
(51) Int. Cl.: G01F 1/66

(54) **VERFAHREN UND MESSEINRICHTUNG ZUR ERMITTLUNG EINER MESSINFORMATION**
METHOD AND MEASURING DEVICE FOR DETECTING A MEASUREMENT INFORMATION
PROCÉDÉ ET DISPOSITIF DE MESURE PERMETTANT DE DÉTERMINER UNE INFORMATION DE MESURE

(30) Priorität: 24.04.2018 DE 102018003311
(43) Veröffentlichungstag der Anmeldung: 06.11.2019
(73) Patentinhaber: Diehl Metering GmbH, 91522 Ansbach (DE)
(72) Erfinder: Ploß, Peter, 95445 Bayreuth (DE); Mayle, Michael, 91522 Ansbach (DE)
(74) Vertreter: Diehl Patentabteilung

(56) Entgegenhaltungen:
- EP-A1- 0 264 991
- WO-A1-03/098166
- DE-A1-102008 029 772
- DE-A1-102012 019 217
- DE-A1-102013 101 950
- DE-A1-102016 119 910

## Beschreibung

Die Erfindung betrifft ein Verfahren zur Ermittlung einer Messinformation mit einer Messeinrichtung, insbesondere mit einem Durchflussmesser, mit einem ein Fluid aufnehmenden und/oder von dem Fluid durchströmbaren Messrohr, wobei durch an einer Seitenwand des Messrohrs angeordnete erste Schwingungswandler zeitlich nacheinander in der Seitenwand des Messrohrs geführte erste und zweite Wellen angeregt und
- in einer ersten Alternative direkt in der Seitenwand oder indirekt über das Fluid zu an der oder einer weiteren Seitenwand des Messrohrs angeordneten zweiten Schwingungswandlern geführt und dort zur Ermittlung von ersten Messdaten für die erste Welle und von zweiten Messdaten für die zweite Welle erfasst werden, wobei zur Erfassung eine erste und eine zweite Untergruppe der zweiten Schwingungswandler genutzt werden oder
- in einer zweiten Alternative entlang eines Ausbreitungspfades zurück zu den ersten Schwingungswandlern geführt und dort zur Ermittlung von ersten Messdaten für die erste Welle und von zweiten Messdaten für die zweite Welle erfasst werden, wobei zur Erfassung eine erste und eine zweite Untergruppe der ersten Schwingungswandler genutzt werden,
wobei in beiden Alternativen die Messinformation in Abhängigkeit der ersten und der zweiten Messdaten ermittelt wird oder wobei in beiden Alternativen die ersten Messdaten genutzt werden, um einen Parameter der Anregung der zweiten Welle zu bestimmen, und die Messinformation in Abhängigkeit der zweiten Messdaten ermittelt wird. Daneben betrifft die Erfindung eine Messeinrichtung.

Eine Möglichkeit, einen Durchfluss in einem Messrohr zu messen, sind Ultraschallzähler. Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflexionen an Wänden oder speziellen Reflexionselementen zu einem zweiten Ultraschallwandler geführt wird. Aus der Laufzeit der Ultraschallwelle zwischen den Ultraschallwandlern bzw. aus einem Laufzeitunterschied bei einer Vertauschung von Sender und Empfänger kann eine Durchflussgeschwindigkeit durch das Messrohr bestimmt werden.

Aus dem Artikel G. Lindner "Sensors and actuators based on surface accustic waves propagating along solid liquid interfaces", J. Phys. D: Appl. Phys. 41 (2008) 123002, ist es bekannt, zur Anregung von geführten Wellen sogenannte Interdigitaltransducer zu nutzen, bei denen ein piezoelektrisches Element genutzt wird, das kammartig ineinander greifende Steuerleitungen aufweist, um eine Anregung bestimmter Anregungsmoden geführter Wellen zu erreichen. Werden mit einem solchen Ansatz Lamb-Wellen in einer Seitenwand eines Messrohrs angeregt, so regen diese wiederum Kompressionswellen in einem in dem Messrohr geführten Fluid an. Umgekehrt kann eine durch das Fluid geführte Kompressionswelle in der Seitenwand wiederum geführte Wellen anregen, die durch einen entsprechenden Sensor, beispielsweise ebenfalls einen Interdigitaltransducer, empfangen werden können. Hierüber kann eine ultraschallbasierte Durchflussmessung realisiert werden, bei der die Ultraschallwandler außerhalb des Messrohrs angeordnet sein können.

Bei Messungen an Fluiden ist es häufig gewünscht, zusätzliche Informationen über das Fluid bzw. die Messbedingungen zu erhalten. Diese Zusatzinformationen können separat betrachtet werden, es ist jedoch auch möglich, die Parametrisierung der Messeinrichtung in Abhängigkeit dieser Größen anzupassen bzw. diese Größen bei der Ermittlung der Messinformation zu berücksichtigen, um eine höhere Messgenauigkeit zu erreichen. Beispielsweise können ein Druck im Messrohr und eine Temperatur des Fluids bzw. des Umfelds der Messeinrichtung die Messung beeinflussen. Zugleich erhöht jedoch eine zusätzliche Sensorik, die erforderlich ist, um solche Zusatzinformationen zu erfassen, die Komplexität der Messeinrichtung, womit beispielsweise höhere Kosten und/oder ein höherer Bauraumverbrauch verbunden sein können.

Ein Ultraschallwandler für ein Ultraschall-Durchflussmessgerät ist aus der Druckschrift WO 03/098166 A1 bekannt. Mehrere Piezoelemente sind zeitversetzt mit einer Steuerlogik ansteuerbar, wodurch die Ausbreitungsrichtung einer abgestrahlten Ultraschallwelle über einen weiten Bereich variiert werden kann.

In dem Verfahren zur Messung einer Strömungsgeschwindigkeit fluider Medien gemäß der Druckschrift DE 10 2013 101 950 A1 werden in einen Kanalwandabschnitt integrierte Ultraschallwandler genutzt. In einer Gruppe angeordnete Ultraschallwandler werden nacheinander um eine Verzögerungszeit verzögert angesteuert, wobei die Verzögerungszeit der Laufzeit der Plattenwelle zwischen zwei benachbarten Ultraschallwandlern entspricht.

Zudem werden elektrische Signale von Ultraschallwandlern zeitverzögert aufsummiert, sodass sich der Signal-Rausch-Abstand des Empfangssignals der Gruppe erhöht.

In dem Verfahren zur Bestimmung eines Durchflusses eines Messmediums durch ein Messrohr gemäß der Druckschrift DE 10 2008 029 772 A1 werden während einer Diagnosephase Ultraschallsignale von einem ersten Ultraschallsensor durch einen zweiten Ultraschallsensor empfangen, wobei für jedes elektromechanische Ultraschall-Wandlerelement des zweiten Ultraschallsensors mindestens eine Prozessgröße ermittelt wird, aufgrund der in einer nachfolgenden Messphase aktive elektromechanische Ultraschall-Wandlerelemente des zweiten Ultraschallsensors ausgewählt werden.

Die Druckschrift DE 10 2012 019 217 A1 schlägt vor, zur Bestimmung einer Durchflussrate eines Mediums durch ein elektrisch leitendes Rohr durch ein variierendes Magnetfeld Ultraschallwellen in dem Rohr zu erzeugen. Hierbei werden erzeugte Ultraschallwellen derart überlagert, dass eine Amplitude einer resultierenden Wellen in Richtung eines Empfangswandlers vergrößert und in Richtung weg von dem Empfangswandler verringert wird.

Ein Clamp-On-Ultraschallsensor zur Verwendung bei einem Ultraschall-Durchflussmessgerät ist aus der Druckschrift DE 10 2016 119 910 A1 bekannt. Dieser ist dazu eingerichtet, in einer Messrohrwandung wenigstens eine Lambwellen-Mode zu erzeugen. Um einen Einsatz an verschiedenen Messrohrtypen zu ermöglichen, weist der Clamp-On-Ultraschallsensor ein austauschbares Koppelelement auf, welches an den jeweiligen Messrohrtyp angepasst ist.

Die Druckschrift EP 0 264 991 A1 offenbart einen Ultraschalldurchflussmesser, dessen Schwingungswandler jeweils durch eine Reihe benachbarter Unterwandler gebildet sind, für die Ansteuersignale mit einer Phasendifferenz bereitgestellt werden, die so gewählt ist, dass sich der Schwingungswandler ungefähr sinusförmig mit einer Wellenlänge, die der Wellenlänge einer bestimmten Schwingungsmode der Messrohrwand entspricht, verformt.

Der Erfindung liegt somit die Aufgabe zugrunde, in einer Messeinrichtung, insbesondere in einem Durchflussmesser, mit geringem technischen Aufwand Zusatzinformationen über die Umgebungsbedingungen der Messeinrichtung bzw. ein geführtes Fluid und/oder über den Einfluss der Umgebungsbedingungen auf die Messung zu ermitteln.

Die Aufgabe wird erfindungsgemäß durch ein Verfahren der eingangs genannten Art gelöst, wobei zur Erfassung der ersten Messdaten Messsignale der ersten und zweiten Untergruppe zueinander addiert werden und zur Erfassung der zweiten Messdaten Messsignale der ersten und zweiten Untergruppe voneinander subtrahiert werden oder umgekehrt.

In dem erfindungsgemäßen Verfahren ist es möglich, dass alle ersten Schwingungswandler zur Anregung der zweiten Welle mit einer gegenüber der zur Anregung der ersten Welle genutzten Polarität umgekehrten Polaritäten betrieben werden oder zur Anregung der ersten und der zweiten Welle voneinander unterschiedlich Untergruppen der ersten Schwingungswandler betrieben werden.

Die Nutzung von mehreren Schwingungswandlern ermöglicht es, wie später noch genauer erläutert werden wird, geführte Wellen modenrein anzuregen bzw. nur Signale einer bestimmten Mode zu erfassen. Durch die erläuterte Variation der Anregungs- bzw. Empfangsbedingungen zwischen den Erfassungen der ersten und zweiten Messdaten können, wie noch im Detail erläutert werden wird, Informationen über die Phasen- und Gruppengeschwindigkeit in der bzw. der weiteren Seitenwand des Messrohrs und die Temperatur des Messrohrs ermittelt werden. Diese Informationen können wiederum genutzt werden, um den Messbetrieb der Messeinrichtung bzw. die Verarbeitung von Messdaten im Rahmen weiterer Messungen zu verbessern. Die erste bzw. zweite Untergruppe können jeweils einen oder mehrere Schwingungswandler umfassen. Ebenso können die zur Anregung der ersten und zweiten Welle genutzten, unterschiedlichen Untergruppen der ersten Schwingungswandler jeweils genau einen Schwingungswandler oder jeweils mehrere Schwingungswandler umfassen. Beispielsweise kann zur Anregung der ersten Welle genau einer der ersten Schwingungswandler betrieben werden und zur Anregung der zweiten Welle kann genau ein anderer der Schwingungswandler betrieben werden.

Die Nutzung mehrerer Schwingungswandler zum Senden bzw. zum Empfang der geführten Welle dient insbesondere dazu, eine Modenreinheit der Anregung bzw. eine Filterung bei Empfang auf die relevante Mode zu erreichen. Sollen beispielsweise Lamb-Wellen als geführte Wellen genutzt werden, so können, bei einer gegebenen Frequenz der Anregung, verschiedene Moden mit unterschiedlichen Wellenlängen angeregt werden. Bei ausreichend geringen Anregungsfrequenzen sind nur zwei Schwingungsmoden anregbar, nämlich eine asymmetrische Ao-Mode und eine symmetrische So-Mode.

Durch eine entsprechende Anordnung der Anregungsbereiche und eine entsprechende Wahl der Anregungsfrequenz kann eine zu dämpfende Schwingungsmode durch eine destruktive Interferenz zumindest in einer Ausbreitungsrichtung bedämpft bzw. eine zu verstärkende Mode durch eine konstruktive Interferenz verstärkt werden. Bei Kenntnis der Dispersionsrelation der Seitenwand bzw. der weiteren Seitenwand kann die Anregungsfrequenz für das Anregungssignal, das zur Steuerung der Schwingungswandler genutzt wird, derart gewählt werden, dass die zu verstärkende Schwingungsmode die doppelte oder halbe Wellenlänge der zu dämpfenden Schwingungsmode aufweist. Die Abstände der Schwingungswandler bzw. ihrer Anregungsbereiche können nun so gewählt werden, dass ihr Abstand einem ungeradzahligen Vielfachen der kürzeren der beiden Wellenlängen entspricht. Werden die Schwingungswandler nun mit dem gleichen Anregungssignal und gleicher Polarität betrieben, so resultiert eine destruktive Interferenz für die längerwellige Mode und eine konstruktive Interferenz für die kürzerwellige Mode. Bei einem Betrieb benachbarter Schwingungswandler mit einem Phasenversatz von 180° bzw. mit umgekehrter Polarität wird hingegen die längerwellige Mode verstärkt, während die kürzerwellige Mode bedämpft wird. Das Gleiche gilt auch beim Empfang der geführten Welle, das heißt beim Erfassen der ersten bzw. zweiten Messdaten. Werden hierzu Schwingungswandler genutzt, deren Abstand einem ungeradzahligen Vielfachen der Wellenlänge der kürzerwelligen Mode entspricht, führt eine Addition der Messsignale der Schwingungswandler dazu, dass sich die an den verschiedenen Schwingungswandlern aus der längerwelligen Mode resultierenden Signale gegenseitig aufheben, so dass der Beitrag dieser Mode aus der Summe der Messsignale entfernt bzw. gefiltert wird. Werden die Messsignale benachbarter Schwingungswandler in diesem Abstand jedoch voneinander subtrahiert, was beispielsweise durch eine Verschaltung mit entgegengesetzter Polarität möglich sein kann, wird der Beitrag der kürzerwelligen Mode gefiltert, womit ausschließlich der Beitrag der längerwelligen Mode verbleibt.

Die beschriebene Anordnung der Schwingungswandler kann dadurch realisiert werden, dass mehrere Schwingungswandler linear in dem erläuterten Abstand hintereinander angeordnet werden, insbesondere in einer Durchflussrichtung des Messrohrs hintereinander. Es ist jedoch auch möglich, die Schwingungswandler entlang gekrümmter Linien, also beispielsweise als konzentrische Kreise mit dem beschriebenen Abstand, anzuordnen. Neben er vorangehend erläuterten Nutzung der Schwingungswandler zum Erreichen einer Modenselektivität können Schwingungswandler mit entsprechend gewählten Abständen und Anregungsfrequenzen auch genutzt werden, um eine Abstrahlgeometrie vorzugeben, also beispielsweise geführte Wellen ausschließlich in eine Richtung abzustrahlen, verschiedene Moden in verschiedene Richtungen abzustrahlen oder Ähnliches. Die erfindungsgemäß vorgeschlagene Durchführung separater Messungen zur Ermittlung erster und zweiter Messdaten, wobei die Polarität der sendenden bzw. empfangenden Schwingungswandler verändert wird, ist auch in diesem Fall nutzbar.

Die Schwingungswandler können jeweils als piezoelektrische Schwingelemente ausgebildet sein. Hierbei kann ein Element aus einer Piezokeramik oder einem anderen piezoelektrischen Material insbesondere eine Elektrode an der dem Messrohr zugewandten und eine Elektrode auf der von dem Messrohr abgewandten Seite aufweisen. Die Elektrode auf der messrohrzugewandten Seite kann auch über das piezoelektrische Element hinausstehen bzw. dieses teilweise umfassen, um eine leichtere Kontaktierung zu ermöglichen. Die Schwingungswandler können Ultraschallwandler sein.

Soll mit der Messeinrichtung eine Durchflussgeschwindigkeit gemessen werden oder soll die geführte Welle entlang dem Messrohr geführt werden, beispielsweise um eine Verformung des Messrohrs aufgrund des Fluiddrucks zu erfassen, werden typischerweise separate Schwingungswandler genutzt, um die geführte Welle auszusenden und zu empfangen, wobei häufig eine entsprechende Messung anschließend mit umgekehrten Rollen wiederholt wird. In einigen Fällen kann es jedoch auch zweckmäßig sein, die ausgesendete geführte Welle über die gleichen Schwingungswandler zu erfassen, die auch zum Aussenden der geführten Welle genutzt wurden. Beispielsweise kann die geführte Welle entlang dem Ausbreitungspfad einmalig oder mehrmals um das Messrohr herumgeführt werden oder nach einer Ausbreitung entlang des Messrohrs an einem Reflexionselement reflektiert werden, womit die geführte Welle zu den gleichen Schwingungswandlern zurückgeführt wird, die auch zur Aussendung dieser Welle genutzt wurden. Die erfindungsgemäße Variation des Betriebs der Schwingungswandler zum Senden der ersten bzw. zweiten Welle und zum Erfassen der ersten und zweiten Messdaten kann in beiden Fällen genutzt werden.

Als Messinformation können eine Phasengeschwindigkeit und/oder eine Gruppengeschwindigkeit der ersten und/oder zweiten Welle, insbesondere in der Seitenwand, und/oder eine Temperatur des Messrohrs und/oder des Fluids und/oder eine Sollfrequenz eines Ansteuersignals, das zum Betrieb der ersten Schwingungswandler im Rahmen einer Ermittlung einer das Fluid oder die Fluidströmung betreffenden Fluidinformation genutzt wird, ermittelt werden.

Um eine Phasen- und/oder Gruppengeschwindigkeit zu ermitteln, werden in einer nicht erfindungsgemäßen Ausgestaltung die erste und zweite Welle auf gleiche Weise angeregt und eine Erfassung der ersten Messdaten erfolgt ausschließlich über die erste Untergruppe der ersten oder zweiten Schwingungswandler und eine Erfassung der zweiten Messdaten erfolgt ausschließlich über die zweite Untergruppe der ersten oder zweiten Schwingungswandler. Die erste und zweite Untergruppe können, wie erläutert, auch jeweils nur einen Schwingungswandler umfassen. Sind diese Untergruppe nun unterschiedlich weit von den ersten Schwingungswandlern beabstandet bzw. liegen sie auf verschiedenen Positionen des Ausbreitungspfades, auf dem die geführte Welle zurück zu den ersten Schwingungswandlern geführt wird, passiert die geführte Welle zunächst die erste und dann die zweite Untergruppe. Durch Vergleich der ersten und zweiten Messdaten kann ein Phasenunterschied zwischen diesen Messdaten ermittelt werden. Ist die relative Lage der ersten und zweiten Gruppe bekannt, so kann hieraus eine Phasengeschwindigkeit ermittelt werden. Ergänzend oder alternativ kann eine Einhüllende der ersten und zweiten Messdaten ermittelt werden und anhand der relativen Verschiebung der Einhüllenden und dem Abstand der Gruppen der Schwingungswandler kann eine Gruppengeschwindigkeit der geführten Welle ermittelt werden.

Ergänzend oder alternativ kann die obig beschriebene Längenänderung des Ausbreitungspfades auch dadurch realisiert werden, dass zur Anregung der ersten und zweiten Welle unterschiedliche Untergruppen der ersten Schwingungswandler angesteuert werden. Beispielsweise können die erste Welle und die zweite Welle jeweils durch genau einen der ersten Schwingungswandler angeregt werden, wobei die zur Anregung der ersten und zweiten Welle genutzten Schwingungswandler insbesondere unterschiedliche Abstände zu den zweiten Schwingungswandlern aufweisen, oder die unterschiedlichen Untergruppen, die jeweils mehrere erste Schwingungswandler umfassen, können unterschiedlich weit von den zweiten Schwingungswandlern entfernt sein.

Die Schwingungsübertragung zwischen den verschiedenen ersten Schwingungswandlern bzw. zwischen den verschiedenen zweiten Schwingungswandler erfolgt im Wesentlichen ausschließlich über die Seitenwand selbst. Daher können diese Informationen beispielsweise genutzt werden, um eine Durchflussmessung, die sowohl von der Phasen- bzw. Gruppengeschwindigkeit der Kompressionswelle im Fluid als auch von der Phasen- bzw. Gruppengeschwindigkeit der geführten Welle in der bzw. der weiteren Seitenwand abhängt, zu korrigieren.

Ergänzend oder alternativ kann die ermittelte Phasen- bzw. Gruppengeschwindigkeit beispielsweise dazu genutzt werden, eine elastische Verformung des Messrohrs aufgrund eines Fluiddrucks zu erkennen und insbesondere den Fluiddruck zu ermitteln. Die erläuterte Messung könnte prinzipiell auch durchgeführt werden, indem insgesamt nur eine geführte Welle angeregt wird und die ersten und zweiten Messdaten über separate Erfassungskanäle erfasst werden. Dies würde jedoch den technischen Aufwand zur Implementierung der Messeinrichtung erhöhen. Beispielsweise wäre ein zusätzlicher Analog-DigitalUmsetzer oder ein Multiplexing erforderlich, um die ersten und zweiten Messdaten im Wesentlichen zeitgleich zu erfassen. Die sequentielle Erfassung der ersten und zweiten Messdaten kann hingegen sehr einfach implementiert werden, da ausschließlich umgeschaltet werden muss, welche der Untergruppen jeweils von der Datenerfassung getrennt wird.

Der bereits beschriebene Ansatz zur modenreinen Anregung bzw. zur modenselektiven Erfassung von geführten Wellen ist empfindlich bezüglich Änderungen der Dispersionsrelation bzw. der Messgeometrie, die beispielsweise aus einer Änderung der Temperatur des Messrohrs resultieren können. Die Temperatur des Messrohrs hängt wiederum von der Temperatur des Fluids und der Umgebung ab. Das erfindungsgemäße Verfahren kann daher einerseits dazu genutzt werden, eine Sollfrequenz eines Ansteuersignals für einen späteren Betrieb anzupassen, um eine Modenreinheit zu verbessern. Andererseits können Abweichungen von den erwarteten Messwerten ausgewertet werden, um, beispielsweise über eine Look-Up-Tabelle, die Temperatur des Messrohrs bzw. des Fluids zu ermitteln. Verschiedene Ansätze hierfür werden im Folgenden detailliert diskutiert.

Die Messinformation kann in Abhängigkeit von einer relativen Phasenlage jeweiliger als erste und zweite Messdaten erfasster Signalverläufe oder von einem anhand der Einhüllenden dieser Signalverläufe ermittelten Laufzeitunterschied zwischen der ersten und zweiten Welle ermittelt werden. Dies kann, wie vorangehend erläutert, dazu genutzt werden, die Phasen- und/oder Gruppengeschwindigkeit der geführten Wellen zu bestimmen. Zur Ermittlung einer Temperatur bzw. zur Ermittlung einer Sollfrequenz wird jedoch vorzugsweise ein alternativer Ansatz genutzt, bei dem statt dem Empfangsort die Art der Anregung variiert wird. Werden alle ersten Schwingungswandler zur Anregung der zweiten Welle mit einer gegenüber der zur Anregung der ersten Welle genutzten Polarität umgekehrten Polarität betrieben und erfolgt die Erfassung beider Messdaten gleich, so würde bei dem bereits erläuterten Ansatz zur phasenselektiven Anregung die zu dämpfende Mode in beiden Fällen vollständig gedämpft und die zu verstärkende Mode würde invertiert empfangen, das heißt mit einem Phasenversatz von 180°. Ändert sich nun der Abstand der ersten Schwingungswandler bezogen auf die Wellenlänge der zu dämpfenden bzw. zu verstärkenden Moden, so führt dies einerseits dazu, dass die zu dämpfende Schwingungsmode nicht vollständig bedämpft wird. Andererseits wird die zu verstärkende Mode mit einem typischerweise geringen Phasenversatz überlagert, der dazu führt, dass diese Mode in der Gesamtwelle einerseits eine etwas geringere Amplitude und andererseits gegenüber einer optimal gleichphasigen Überlagerung einen Phasenversatz aufweist. Ein Phasenversatz zwischen den ersten und zweiten Messdaten kann jedoch mit hoher Genauigkeit, beispielsweise durch eine Korrelation der Messdaten, bestimmt werden. Typischerweise wird ein derartiger Phasenfehler primär durch eine Temperatur des Messrohrs bzw. des Fluids verursacht. Die Temperatur kann somit zumindest näherungsweise aus dem ermittelten Phasenunterschied ermittelt werden, beispielsweise mithilfe einer Look-Up-Tabelle, die beispielsweise durch Vorversuche befüllt werden kann. Der gleiche Ansatz könnte auch genutzt werden, um eine für weitere Messungen zu nutzende Anregungsfrequenz zu bestimmen.

Die Sollfrequenz kann auch bestimmt werden, indem eine Abweichung der relativen Phasenlage von einem Sollwert, insbesondere von 180°, durch Variation der Frequenz eines Ansteuersignals, das zum Betrieb der ersten Schwingungswandler zur Anregung der ersten und der zweiten Welle verwendet wird, minimiert wird. Wie bereits vorangehend erläutert, sollte bei einer optimalen Anregungsgeometrie und somit bei einer voraussichtlich optimal modenselektiven Anregung die Phasenlage zwischen dem ersten Messsignal und dem zweiten Messsignal genau 180° sein, wenn die Erfassung auf gleiche Weise erfolgt und die ersten Schwingungswandler zur Anregung der zweiten Welle mit einer gegenüber der zur Anregung der ersten Welle genutzten Polarität umgekehrt Polarität betrieben werden. Die Anregung der ersten und zweiten Welle und die Erfassung der ersten und zweiten Messdaten kann somit wiederholt durchgeführt werden, wobei die Frequenz des Ansteuersignals variiert wird. Die Frequenz des Ansteuersignals kann mit einem vorgegebenen Muster variiert werden. Vorzugsweise wird die Frequenz jedoch in Abhängigkeit der Abweichung der relativen Phasenlage von dem Sollwert variiert. Die relative Phasenlage kann somit letztlich durch Anpassung der Frequenz des Ansteuersignals auf einen Sollwert, insbesondere von 180°, geregelt werden.

In den vorangehend erläuterten Ausführungsvarianten wird vorzugsweise das gleiche Ansteuersignal und insbesondere die gleiche Frequenz zur Anregung der ersten und zweiten Welle verwendet. Zwar kann die Anregung, wie vorangehend erläutert, durch Umkehrung der Polarität invertiert werden, ansonsten werden die erste und zweite Welle jedoch vorzugsweise gleich angeregt.

Alternativ hierzu ist es jedoch möglich, dass die ersten Messdaten genutzt werden, um eine Anregungsfrequenz eines Anregungssignals für die ersten Schwingungswandler zur Anregung der zweiten Welle als den Parameter der Anregung zu bestimmen. Dies kann insbesondere dazu dienen, anhand der ersten Messdaten eine Anregungsfrequenz zu bestimmen, die eine möglichst starke Modenselektivität ermöglicht, so dass die zweiten Messdaten mit hoher Modenselektivität erfasst werden können. Dies ist besonders vorteilhaft, wenn die Messinformation, also beispielsweise eine Fluidinformation, ausschließlich in Abhängigkeit der zweiten Messdaten ermittelt wird.

Die Anregungsfrequenz kann insbesondere bestimmt werden, indem durch Variation der Frequenz eines Ansteuersignals, das zum Betrieb der ersten Schwingungswandler zur Anregung der ersten Welle verwendet wird, eine Amplitude des oder eines als erste Messdaten über die ersten oder zweiten Schwingungswandler erfassten Signalverlaufs minimiert wird. Werden die Messsignale der Untergruppen der ersten oder zweiten Schwingungswandler zur Erfassung der ersten Messdaten derart überlagert, dass eine bestimmte Schwingungsmode vollständig destruktiv interferiert, so ist die Amplitude des Signalverlaufs dann minimal, wenn die erste Welle näherungsweise ausschließlich diese Mode umfasst, also wenn durch die ersten Schwingungswandler eine möglichst modenreine Anregung dieser Schwingungsmode erfolgt.

Prinzipiell könnte die erste Welle nur einmal angeregt werden und aus den erfassten Messdaten könnte direkt eine voraussichtlich ideale Anregungsfrequenz bestimmt werden. Hierzu könnte beispielsweise eine Look-Up-Tabelle genutzt werden. Vorzugsweise könnte hierbei eine frequenzselektive Betrachtung erfolgen, so dass Rauschkomponenten und andere Schwingungen, die deutlich andere Frequenzen aufweisen, nicht berücksichtigt werden. Vorzugsweise werden jedoch mehrere erste Wellen angeregt und mehrere erste Messdaten erfasst, wobei die Frequenz des Ansteuersignals variiert wird. Die Variation kann gemäß einem vorgegebenen Muster erfolgen, vorzugsweise hängt die Variation aber von der Amplitude des Signalverlaufs ab. Insgesamt wird somit die Amplitude des Signalverlaufs durch Variation der Frequenz des Ansteuersignals auf ein Minimum geregelt. Um die zweiten Messdaten zu erfassen, nachdem dieses Minimum aufgefunden wurde, kann beispielsweise von einer Addition der Messsignale der Untergruppen zu einer Subtraktion der Messsignale gewechselt werden oder umgekehrt, so dass die zweiten Schwingungswandler vorzugsweise bei der Erfassung der zweiten Messdaten modenselektiv jene Schwingungsmode erfassen, die nun durch die ersten Schwingungswandler optimal modenselektiv angeregt wird.

In dem erfindungsgemäßen Verfahren werden vorzugsweise alle ersten Schwingungswandler mit einem gemeinsamen Ansteuersignal betrieben, wobei für zumindest einen Teil der ersten Schwingungswandler eine Polarität, mit der das Ansteuersignal dem jeweiligen Schwingungswandler zugeführt wird, durch eine Schalteinrichtung umschaltbar ist. Hierdurch kann ermöglicht werden, dass verschiedene Schwingungsmoden zumindest näherungsweise modenselektiv angeregt werden.

Die ersten Schwingungswandler können jeweils zwei Elektroden aufweisen, durch deren Bestromung eine Schwingung des jeweiligen Schwingungswandlers ausgelöst wird, wobei die Elektroden durch die Schalteinrichtung jeweils wahlweise mit einem ersten Potential, das insbesondere durch das Ansteuersignal bestimmt wird, und einem zweiten Potential, das insbesondere konstant ist, verbindbar sind. Durch das beschriebene Vorgehen wird mit geringem technischen Aufwand erreicht, dass die Polarität dieser Schwingungswandler umgeschaltet werden kann. Das konstante Potential kann insbesondere ein Masse-Potential sein.

Ergänzend können die einzelnen Elektroden der Schwingungswandler durch die Schalteinrichtung auch von beiden Potentialen trennbar sein. Die Schalteinrichtung kann auch derart eingerichtet sein, dass das erste und das zweite Potential kurzgeschlossen werden können und/oder dass beide Elektroden miteinander kurzschließbar sind. Somit kann die Zahl der zur Schwingungsanregung genutzten ersten Schwingungswandler variierbar sein, beispielsweise um verschiedene Anregungsmuster zu realisieren.

Die ersten und zweiten Messdaten können durch eine Erfassungseinrichtung über zwei Messanschlüsse erfasst werden, wobei zumindest einer der ersten oder zweiten Schwingungswandler zwei Elektroden aufweist, die über die oder eine weitere Schalteinrichtung wahlfrei mit den Messanschlüssen koppelbar sind. Insbesondere liegt ein Messanschluss auf dem Massepotential und der zweite Messanschluss dient der Signalerfassung, insbesondere über einen Analog-Digital-Wandler. Es ist jedoch auch möglich, dass die Erfassungseinrichtung die Differenz der Signale an den Messanschlüssen erfasst und wandelt. Ergänzend ist es möglich, dass zumindest Teile der Elektroden von beiden Messanschlüssen trennbar sind. Hierdurch kann beispielsweise mit geringem technischen Aufwand eine Berücksichtigung ausschließlich der Messsignale der ersten bzw. der zweiten Untergruppe implementiert werden.

Neben dem erfindungsgemäßen Verfahren betrifft die Erfindung eine Messeinrichtung mit einem ein Fluid aufnehmenden und/oder von dem Fluid durchströmbaren Messrohr, an einer Seitenwand des Messrohrs angeordneten ersten Schwingungswandlern und einer Erfassungseinrichtung, wobei die Erfassungseinrichtung dazu eingerichtet ist, das erfindungsgemäße Verfahren durchzuführen, indem sie die ersten Schwingungswandler zur Anregung der ersten und zweiten Welle ansteuert, die ersten und zweiten Messdaten in der zweiten Alternative über die ersten Schwingungswandler oder in der ersten Alternative über zweite Schwingungswandler der Messeinrichtung erfasst und die Messinformationen ermittelt. Die Messeinrichtung kann insbesondere die erste und/oder zweite Schalteinrichtung aufweisen, wie vorangehend erläutert wurde. Die Erfassungseinrichtung kann die Schalteinrichtung und/oder die weiteren Schalteinrichtung steuern, insbesondere um die Verschaltung der ersten und/oder zweiten Schwingungswandler zwischen der Erfassung der ersten Messdaten und der Erfassung der zweiten Messdaten umzuschalten.

Weitere Vorteile und Einzelheiten der Erfindung ergeben sich aus den folgenden Ausführungsbeispielen sowie den zugehörigen Zeichnungen. Hierbei zeigen schematisch:
- Fig. 1 - 3: verschiedene Ansichten eines Ausführungsbeispiels einer erfindungsgemäßen Messeinrichtung, durch die ein Ausführungsbeispiel des erfindungsgemäßen Verfahrens ausführbar ist,
- Fig. 4: ein Schaltbild zur Verschaltung der ersten bzw. zweiten Schwingungswandler mit der Erfassungseinrichtung im Ausführungsbeispiel gemäß Fig. 1 - 3, und
- Fig. 5: eine Detailansicht eines weiteren Ausführungsbeispiels einer erfindungsgemäßen Messeinrichtung.

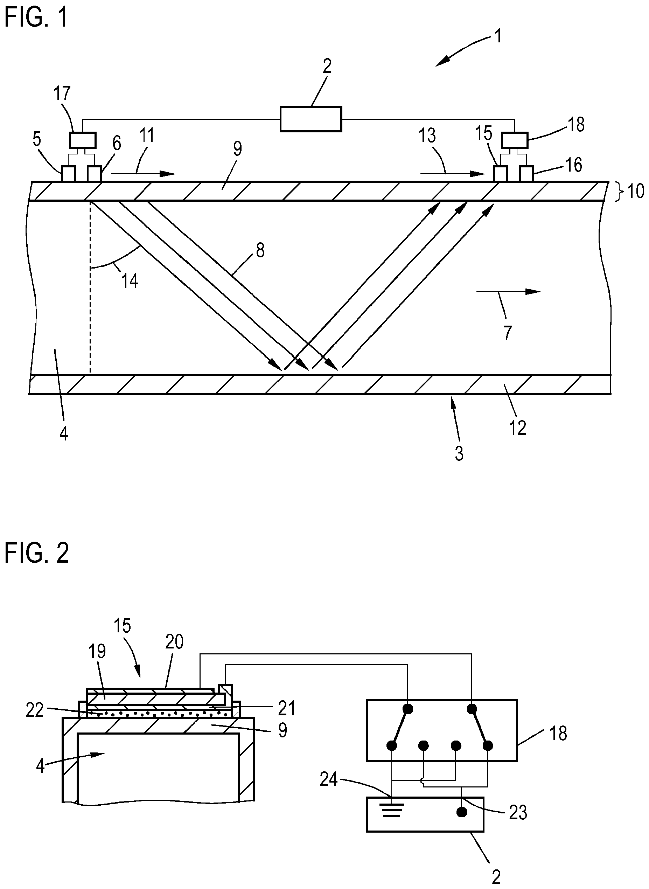

Fig. 1 zeigt eine Messeinrichtung 1 zur Ermittlung einer Messinformation, nämlich einen Durchflussmesser, mit einem Messrohr 3, in dessen Innenraum 4 Fluid aufnehmbar ist bzw. dessen Innenraum 4 von dem Fluid durchströmbar ist. An einer Seitenwand 9 des Messrohrs 3 sind zwei erste Schwingungswandler 5, 6 beabstandet voneinander angeordnet, durch die in der Seitenwand 9 geführte Wellen anregbar sind, die schematisch durch den Pfeil 11 dargestellt sind. Die Anregungsfrequenz ist hierbei so gewählt, dass Lamb-Wellen angeregt werden, womit auch die dem Innenraum 4 zugewandte Fläche der Seitenwand 9 schwingt und somit Kompressionsschwingungen im Fluid anregt, die schematisch durch die Pfeile 8 dargestellt sind. Lamb-Wellen können angeregt werden, wenn die Dicke 10 der Seitenwand 9 vergleichbar mit der Wellenlänge der Transversalwelle im Festkörper ist, welche sich aus dem Verhältnis der Schallgeschwindigkeit der Transversalwelle im Festkörper und der Anregungsfrequenz, mit der die Schwingungswandler 5, 6 schwingen, ergibt.

Die Kompressionswellen werden an der weiteren Seitenwand 12 reflektiert und regen beim erneuten Auftreffen auf die Seitenwand 9 eine geführte Welle 13 an, die zu den Schwingungswandlern 15, 16 geführt und dort erfasst wird. Soll beispielsweise eine Fluidgeschwindigkeit des in Richtung des Pfeils 7 strömenden Fluids erfasst werden, sollten vorzugsweise alle Kompressionsschwingungen im gleichen Rayleigh-Winkel 14 abgestrahlt werden. Der Rayleigh-Winkel 14 hängt von der Phasengeschwindigkeit der geführten Welle und der Schallgeschwindigkeit des Fluids ab. Da bei Lamb-Wellen bei einer gegebenen Anregungsfrequenz mehrere Schwingungsmoden, beispielsweise bei relativ niedrigen Anregungsfrequenzen genau eine asymmetrische und eine symmetrische Mode, angeregt werden, sollte eine modenselektive Anregung und Erfassung der geführten Wellen erfolgen.

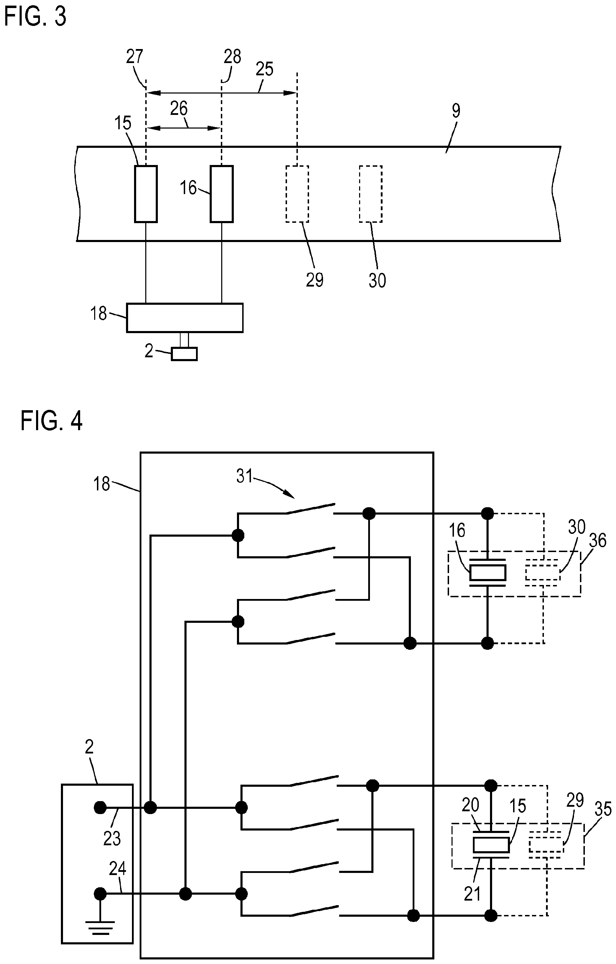

Dies wird in der Messeinrichtung 1 dadurch erreicht, dass sowohl zum Aussenden als auch zum Erfassen der geführten Wellen jeweils mehrere Schwingungswandler 5, 6 bzw. 15, 16 genutzt werden. Die Erfassungseinrichtung 2 steuert die Schwingungswandler 5, 6 mit einem gemeinsamen Ansteuersignal an und erfasst ein gemeinsames Ausgangssignal der Schwingungswandler 15, 16. Durch Schalteinrichtungen 17, 18, die durch die Erfassungseinrichtung 2 steuerbar sind, kann vorgegeben werden, wie die Schwingungswandler 5, 6, 15, 16 mit der Erfassungseinrichtung 2 verschaltet werden, um beispielsweise einzelne der Schwingungswandler 5, 6, 15, 16 von der Erfassungseinrichtung 2 zu trennen bzw. mit umgekehrter Polarität mit der Erfassungseinrichtung 2 zu verbinden. Dies wird im Folgenden mit Bezug auf Fig. 2 und 3 detailliert erläutert werden. Die Beispiele gehen hierbei davon aus, dass genau zwei erste Schwingungswandler 5, 6 und zwei zweite Schwingungswandler 15, 16 verwendet werden. Es wäre jedoch auch möglich, mehr als zwei erste und zweite Schwingungswandler 5, 6, 15, 16 zu verwenden. Hierbei unterteilen sich die ersten bzw. zweiten Schwingungswandler jedoch vorzugsweise in jeweils zwei Gruppen, deren Mitglieder jeweils auf gleiche Weise mit der Erfassungseinrichtung 2 verbunden sind oder auch nicht. Beispielsweise kann der ersten Gruppe das Ansteuersignal und der zweiten Gruppe ein invertiertes Ansteuersignal zugeführt werden oder die erste oder die zweite Gruppe können von der Erfassungseinrichtung 2 getrennt werden.

Die Fig. 2 und 3 zeigen die Verbindung des zweiten Schwingungswandlers 15 mit der Erfassungseinrichtung 2 und die Anordnung des Schwingungswandlers 15 an der Seitenwand 9. Wie in Fig. 2 am Beispiel des Schwingungswandlers 15 dargestellt ist, bestehen die Schwingungswandler 5, 6, 15, 16 jeweils aus einem piezoelektrischen Element 19, an dessen der Seitenwand 9 zugewandten und abgewandten Seite jeweils eine Elektrode 20, 21 angeordnet ist. Die Elektrode 21 umgreift hierbei das piezoelektrische Element 19 um eine leichtere Kontaktierung der Elektrode 21 zu ermöglichen. Durch Anlegen einer Spannung zwischen den Elektroden 20, 21 kann die Ausdehnung des piezoelektrischen Elements 19 senkrecht zur Seitenwand 9 variiert werden, wodurch Schwingungen in die Seitenwand 9 eingekoppelt werden können. Umgekehrt führen Schwingungen der Seitenwand 9 zu einer Verformung des piezoelektrischen Elements 19 und somit zu einem Spannungsabfall zwischen den Elektroden 20, 21. Der Schwingungswandler 15 ist über eine viskose Zwischenschicht 22 mit der Seitenwand 9 gekoppelt. Alternativ könnte er beispielsweise mit der Seitenwand verklebt sein.

Die Elektroden 20, 21 sind mit zwei Messanschlüssen 23, 24 der Erfassungseinrichtung 2 verbunden, wobei die Elektrode 21 über den Messanschluss 24 mit einem Masse-Potential verbunden ist und die Elektrode 20 über den Messanschluss 23 einer Messschaltung zugeführt wird, in der insbesondere eine Analog-Digital-Umsetzung erfolgt. Durch Umschalten der Schalteinrichtung 18 kann die Verbindung der Elektroden 20, 21 mit den Messanschlüssen 23, 24 geändert werden, so dass durch ein Schalten der Schalteinrichtung eine Polarität, mit der ein Messsignal dem Messanschluss 23 zugeführt wird, umgekehrt werden kann. Wie später noch detailliert mit Bezug auf Fig. 4 erläutert werden wird, kann für jede der Elektroden 20, 21 der Schwingungswandler 15, 16 durch eine entsprechende Schaltung der Schalteinrichtung 18 bestimmt werden, mit welchem der Messanschlüsse 23, 24 sie verbunden wird. Werden beispielsweise die seitenwandabgewandten Elektroden 20 beider Schwingungswandler 15, 16 mit dem Messanschluss 23 verbunden und die seitenwandzugewandten Elektroden 21 beider Schwingungswandler 15, 16 mit dem Messanschluss 24 verbunden, so addieren sich die an den jeweiligen Elektroden 20, 21 abfallenden Spannungen dann konstruktiv, wenn die piezoelektrischen Elemente 19 in Phase verformt werden, also insbesondere wenn der Abstand der Schwingungswandler 15, 16 einem ganzzahligen Vielfachen der Wellenlänge einer einlaufenden in der Seitenwand 9 geführten Welle entspricht. Wird hingegen die Schalteinrichtung 18 derart umgeschaltet, dass der Messanschluss 23 mit der seitenwandabgewandten Elektrode 20 des Schwingungswandlers 15 und der seitenwandzugewandten Elektrode 21 des Schwingungswandlers 16 verbunden ist oder umgekehrt und der Messanschluss 24 mit den verbleibenden Elektroden, so würde im genannten Fall eine destruktive Interferenz resultieren. Bei einem Einlaufen einer geführten Welle, deren Wellenlänge ein ganzzeiliger Teiler des Abstands der Schwingungswandler 15, 16 ist, würde somit im Wesentlichen kein Messsignal erfasst. Stattdessen würde ein besonders starkes Messsignal erfasst, wenn der Abstand zwischen den Schwingungswandlern 15, 16 ein ungeradzahliges Vielfaches der halben Wellenlänge der einlaufenden geführten Welle ist. Dies kann, wie mit Bezug auf Fig. 3 erläutert wird, genutzt werden, um eine modenselektive Erfassung von geführten Wellen durchzuführen, wobei durch eine Schaltung der Schalteinrichtung 18 bestimmbar ist, welche Mode der geführten Welle erfasst wird. Hierbei ist in Fig. 3 aus Übersichtlichkeitsgründen nur die Kontaktierung der seitenwandabgewandten Elektroden 20 der Schwingungswandler 15, 16 dargestellt.

Die Anregungsfrequenz, mit der eine geführte Welle durch die Schwingungswandler 5, 6 angeregt wird, kann so gewählt werden, dass nur genau zwei Schwingungsmoden anregbar sind, wobei die längerwellige dieser Schwingungsmoden die Wellenlänge 25 aufweist. Werden die Schwingungswandler 15, 16 nun, wie in Fig. 3 dargestellt, derart angeordnet, dass der Abstand 26 zwischen ihren Mitten 27, 28 der Hälfte dieser Wellenlänge 25 entspricht, so kann durch Wahl der Polarität, mit der die Schwingungswandler 15, 16 jeweils mit der Erfassungseinrichtung 2 verbunden sind, also durch Schalten der Schalteinrichtung 18, gewählt werden, für welche der Schwingungsmoden die Messsignale destruktiv interferieren, womit die Erfassung dieser Schwingungsmode unterdrückt wird. Werden beispielsweise die Messsignale der Schwingungswandler 15, 16 addiert, indem sie mit gleicher Polarität mit der Erfassungseinrichtung 2 verbunden werden, resultiert für die Schwingungsmode mit der Wellenlänge 25 eine destruktive Interferenz. Es wird somit im Wesentlichen nur die Schwingungsmode mit der kürzeren Wellenlänge erfasst. Bei einer Subtraktion der Messsignale durch Verbindung der Schwingungswandler 15, 16 mit entgegengesetzten Polaritäten mit der Erfassungseinrichtung 2 gilt das Umgekehrte.

Diese schaltbare Modenselektivität kann dazu genutzt werden, ein Anregungssignal zu "stimmen". Zwar kann bereits bei dem Aufbau der Messeinrichtung darauf geachtet werden, dass eine vorgegebene Anregungsfrequenz und der Abstand der Schwingungswandler 5, 6 derart aufeinander abgestimmt sind, dass über breite Betriebsbereiche eine gute Modenreinheit erreicht wird. Dennoch kann es in einigen Betriebssituationen vorteilhaft sein, die Anregungsfrequenz in Abhängigkeit der aktuellen Betriebssituation anzupassen.

Um dies zu ermöglichen können die Schwingungswandler 5, 6 über die Schalteinrichtung 17 derart verschaltet und mit der Erfassungseinrichtung 2 verbunden werden, dass bei einer bestimmten Anregungsfrequenz eine gewünschte Schwingungsmode und zumindest unter gewissen Betriebsbedingungen zusätzlich eine nicht gewünschte Schwingungsmode angeregt werden. Werden nun die Schwingungswandler 15, 16 über die Schalteinrichtung 18 so mit der Erfassungseinrichtung 2 gekoppelt, dass modenselektiv im Wesentlichen ausschließlich eine Erfassung der nicht gewünschten Schwingungsmode erfolgt, so kann die Anregungsfrequenz variiert werden, bis ein Minimum der empfangenen Amplitude resultiert. Sobald diese Anregungsfrequenz gefunden wurde kann die Verschaltung der Schwingungswandler 15, 16 über die Schalteinrichtung 18 so geändert werden, dass die Erfassungseinrichtung 2 nun im Wesentlichen ausschließlich die Signale der gewünschten Schwingungsmode misst. Anders ausgedrückt wird zunächst wiederholt eine erste Welle angeregt und diese betreffende erste Messdaten werden über die Schwingungswandler 15, 16 erfasst, wobei die Schwingungswandler 15, 16 mit einer gewissen Polarität miteinander verschaltet sind, so dass die Messsignale addiert oder subtrahiert werden. Die Amplitude eines als erste Messdaten erfassten Signalverlaufs wird anschließend durch Variation einer Anregungsfrequenz minimiert, um eine Anregungsfrequenz aufzufinden, bei der eine optimale Modenreinheit der Anregung erwartet wird. Anschließend kann die Polarität wenigstens eines der Schwingungswandler 15, 16 durch Schalten der Schalteinrichtung 18 verändert werden, so dass die Messsignale nun subtrahiert werden, wenn sie zuvor addiert wurden, oder umgekehrt, so dass die Empfindlichkeit der Schwingungswandler 15, 16 für die gewünschte Mode maximiert wird. Bei dieser Verschaltung kann nun eine zweite Welle angeregt werden und es können zweite Messdaten erfasst werden, beispielsweise um eine Durchflussgeschwindigkeit oder einen anderen Fluidparameter eines Fluids im Messrohr 3 zu erfassen.

Die Schalteinrichtung 18 kann zudem dazu eingerichtet sein, einzelne der Schwingungswandler 15, 16 vollständig von der Erfassungseinrichtung 2 bzw. den Messanschlüssen 23, 24 zu entkoppeln. Somit kann eine Erfassung der Messdaten ausschließlich über den Schwingungswandler 15 oder ausschließlich über den Schwingungswandler 16 erfolgen. Dies kann dazu verwendet werden, eine Phasen- und/oder Gruppengeschwindigkeit der geführten Welle in der Seitenwand 9 zu ermitteln. Um dies zu erreichen wird zunächst eine erste geführte Welle durch die Schwingungswandler 5, 6, insbesondere modenrein, angeregt und ausschließlich der Schwingungswandler 15 wird genutzt, um erste Messdaten bezüglich dieser Welle zu erfassen. Anschließend wird die Anregung identisch wiederholt, um eine zweite geführte Welle anzuregen, wobei zweite Messdaten bezüglich dieser Welle ausschließlich durch den Schwingungswandler 16 erfasst werden. Durch einen Vergleich der Phasen der durch die ersten und zweiten Messdaten abgebildeten Signalverläufe kann eine Laufzeit der Schwingungsmode von dem Schwingungswandler 15 zu dem Schwingungswandler 16 ermittelt werden. Der bekannte Abstand 26 zwischen den Schwingungswandlern 15, 16 kann dann durch diese Zeit geteilt werden, um die Phasengeschwindigkeit zu ermitteln.

Alternativ hierzu kann für beide Wellen die Erfassung der Messdaten über beide Schwingungswandler erfolgen, die Anregung kann jedoch für die erste Welle ausschließlich über den Schwingungswandler 15 und für die zweite Welle ausschließlich über den Schwingungswandler 16 erfolgen. Beide Ansätze können auch kombiniert werden, um eine größere Variation der Länge des Ausbreitungspfades zu erreichen.

Da die erste bzw. zweite Welle mit einer definierten Pulsform angeregt werden, können die ersten und zweiten Messdaten zudem genutzt werden, um eine Gruppengeschwindigkeit zu bestimmen. Hierzu wird zunächst eine Einhüllende der Signalverläufe der ersten und zweiten Messdaten ermittelt und durch Vergleich dieser Einhüllenden wird eine Zeitverzögerung der Einhüllenden ermittelt. Wird der Abstand 26 durch diese Zeitverzögerung geteilt, so kann die Gruppengeschwindigkeit berechnet werden. Die Phasen- und Gruppengeschwindigkeiten können beispielsweise genutzt werden, um eine ermittelte Durchflussmenge zu korrigieren. Zur Ermittlung der Durchflussmenge kann insbesondere eine dritte Laufzeit genutzt werden, bei der die Schwingungswandler 5, 6 und die Schwingungswandler 15, 16 gleich verschaltet sind, so dass eine modenselektive Anregung und eine modenselektive Erfassung für die gleiche Mode erfolgt.

Die Schwingungswandler 5, 6 sind auf gleiche Weise mit Steueranschlüssen der Erfassungseinrichtung 2 verbunden, wie die Schwingungswandler 15, 16 mit den Messanschlüssen 23, 24 verbunden sind. Ähnlich wie der Messanschluss 24 kann auch einer der Steueranschlüsse auf einem Massepotential liegen. Der zweite Steueranschluss ist mit einem Potential verbunden, das durch das Ansteuersignal bestimmt ist. Insbesondere wird ein sinusförmig oszillierendes Potential an die mit diesem Anschluss verbundenen Elektroden angelegt, während eine Anregung der geführten Welle erfolgen soll. Durch die Schalteinrichtung 18 kann somit vorgegeben werden, ob die Schwingelemente 5, 6 in Phase oder mit einer Phasenverschiebung von 180° schwingen. Dies kann dazu genutzt werden, zwischen zwei Modi umzuschalten, in denen verschiedene Schwingungsmoden selektiv angeregt werden, wie vorangehend erläutert wurde. Dies kann beispielsweise dazu genutzt werden, im Rahmen einer Durchflussmessung separat Durchflussgeschwindigkeiten für verschiedene Ausbreitungspfade zu messen, so dass beispielsweise Informationen über ein Strömungsprofil gewonnen werden können.

Durch die erläuterte Verbindung der Schwingeinrichtungen 5, 6 mit der Erfassungseinrichtung 2 über die Schalteinrichtung 17 kann zudem die Polarität der Schwingung jedes der Schwingungswandler 5, 6 gleichzeitig umgekehrt werden. Die durch den einzelnen Schwingungswandler 5, 6 angeregten Teilschwingungen werden somit um 180° in der Phase verschoben. Werden, wie vorangehend erläutert, genau zwei Schwingungsmoden angeregt, von denen eine die doppelte Wellenlänge der anderen aufweist und entspricht der Abstand der Schwingungswandler 5, 6 der Wellenlänge der kürzeren dieser Moden, so wird die geführte Welle vollständig modenselektiv angeregt und das über die Schwingungswandler 15, 16 erfasste Signal wird somit bei einer Umschaltung der Polarität der Schwingungswandler 5, 6 um 180° verschoben. Verändert sich nun jedoch die Dispersionsrelation in der Seitenwand oder der Abstand zwischen den Schwingungswandlern 5, 6, beispielsweise aufgrund einer Temperaturänderung oder aufgrund einer Druckänderung im Messrohr und einer hieraus resultierenden elastischen Verformung des Messrohrs 3, so erfolgt für jene Schwingungsmode, die im Wesentlichen konstruktiv überlagert wird, keine phasenrichtige Überlagerung mehr, sondern die beiden überlagerten Wellen sind geringfügig zueinander phasenverschoben. Hieraus resultiert auch, dass bei einer Umpolung sowohl des Schwingungswandlers 5 als auch des Schwingungswandlers 6 eine Phasenverschiebung des Messsignals um einen Phasenwinkel erfolgt, der geringfügig von 180° abweicht.

Dies kann einerseits zum "Stimmen" der Messeinrichtung 1 genutzt werden. Hierbei kann die Anregungsfrequenz variiert werden und für jede Anregungsfrequenz können nacheinander eine erste und eine zweite Welle durch die Schwingungswandler 5, 6 angeregt und zu den Schwingungswandlern 15, 16 geführt und dort zur Ermittlung von ersten Messdaten für die erste Welle und von zweiten Messdaten für die zweite Welle erfasst werden. Die Schwingungswandler 5, 6 können zur Anregung der zweiten Welle mit einer gegenüber der zur Anregung der ersten Welle genutzten Polarität umgekehrten Polarität betrieben werden. Wie vorangehend erläutert wird hierbei bei einer perfekt modenselektiven Anregung eine Phasenverschiebung von genau 180° erwartet. Die Abweichung der Phasenverschiebung von 180° kann somit durch Variation der Anregungsfrequenz minimiert werden, um eine möglichst gute modenselektive Anregung zu erreichen.

In einigen Messsituationen kann durch theoretische Vorüberlegungen oder Vorversuche festgestellt werden, dass die beobachtete Abweichung von einer 180° Phasenverschiebung bei einer Umkehr der Polarität des Betriebs der Schwingungswandler 5, 6 im Wesentlichen durch einen bestimmten Betriebsparameter der Messeinrichtung 1 vorgegeben wird. Beispielsweise kann die Abweichung im Wesentlichen ausschließlich von der Temperatur des Messrohrs und somit insbesondere von der Temperatur des das Messrohr durchströmenden Fluids und/oder der Umgebungstemperatur abhängen. In diesem Fall kann eine Look-Up-Tabelle oder ein mathematischer Zusammenhang zwischen dem Betriebsparameter und dem Grad der Abweichung von 180° Phasenverschiebung bei einer Polaritätsumkehr vorgegeben werden und der vorangehend erläuterte Betrieb der Messeinrichtung kann genutzt werden, um den Betriebsparameter zu ermitteln.

Zum besseren Verständnis der Funktion der Schalteinrichtung 18 bzw. der identisch aufgebauten Schaltvorrichtung 17 ist diese in Fig. 4 nochmals detailliert dargestellt. Die Schalteinrichtungen 17, 18 weisen jeweils zwei Anschlüsse auf, die mit den Mess- bzw. Steueranschlüssen 23, 24 der Erfassungseinrichtung 2 verbunden sind. Zudem weisen sie vier Anschlüsse auf, die mit den einzelnen Elektroden 20, 21 der Schwingungswandler 15, 16 bzw. 5, 6 verbunden sind. Jeder mit einer Elektrode 20, 21 verbundene Anschluss kann über die Schalter 31 wahlweise mit einem der Anschlüsse der Steuereinrichtung 2 verbunden werden. Hierdurch können die einzelnen Schwingungswandler 15, 16 bzw. 5, 6 mit wahlfreier Polarität betrieben werden oder sogar vollständig von der Erfassungseinrichtung 2 entkoppelt werden. Die Schalter 31 sind durch die Erfassungseinrichtung 2 steuerbar. Bei der gezeigten Verschaltung können zudem die Messanschlüsse 23, 24 bzw. Steueranschlüsse der Erfassungseinrichtung 2 durch entsprechendes Schalten der Schalter 31 kurzgeschlossen werden. Prinzipiell wäre es auch möglich, die Schalterkonfiguration so anzupassen, dass die Elektroden 20, 21 einzelner Schwingungswandler 5, 6, 15, 16 kurzgeschlossen werden können, ohne die Messanschlüsse 23, 24 bzw. die Steueranschlüsse kurzzuschließen.

Wie sowohl in Fig. 3 als auch in Fig. 4 dargestellt ist, können in der Messeinrichtung auch mehr als zwei erste und zweite Schwingungswandler genutzt werden. Beispielsweise kann ein weiterer Schwingungswandler 29 parallel zum Schwingungswandler 15 geschaltet werden, um eine gemeinsam angesteuerte erste Untergruppe 35 der Schwingungswandler 15, 16, 29, 30 zu bilden, und ein weiterer Schwingungswandler 30 kann parallel zum Schwingungswandler 16 geschaltet werden, um eine gemeinsam gesteuerte zweite Untergruppe 36 der Schwingungswandler 15, 16, 29, 30 zu bilden. Vorzugsweise werden hierbei Schwingungswandler 15, 29 bzw. 16, 30 parallel geschaltet, deren Abstand einem ganzzahligen Vielfachen der Wellenlänge 25 der längeren der beiden Wellenlänge der anregbaren Schwingungsmoden entspricht.

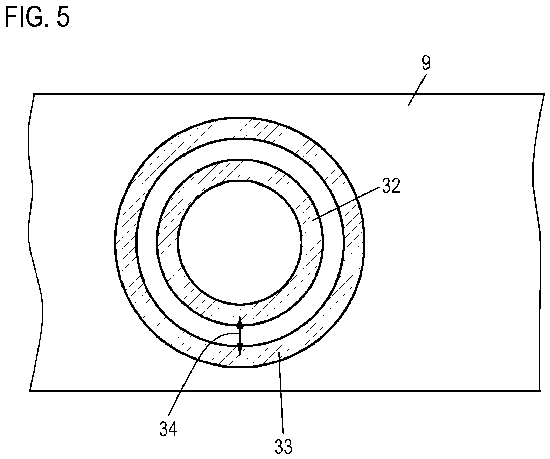

Die bisherigen Erläuterungen gingen davon aus, dass die Schwingungswandler 5, 6 bzw. die Schwingungswandler 15, 16 jeweils linear hintereinander angeordnet sind. Selbstverständlich sind auch andere Anordnungen der Schwingungswandler möglich. Ein Beispiel hierfür ist in Fig. 5 dargestellt. Die beiden Schwingungswandler 32, 33 sind kreisförmige Schwingungswandler, die konzentrisch angeordnet sind. Der Abstand 34 der Mitten der Schwingungswandler 32, 33 entspricht hierbei vorzugsweise, wie zu Fig. 3 erläutert, der Wellenlänge der kurzwelligeren von zwei anregbaren Schwingungsmoden. Offensichtlich sind eine Vielzahl weiterer Varianten denkbar. Die einzelnen Kreise in Fig. 5 könnten jeweils durch mehrere Schwingungswandler gebildet werden, die vorzugsweise gemeinsam angesteuert werden. Statt der Kreisform könnte beispielsweise eine Ellipsenform oder Ähnliches genutzt werden oder es könnten nicht konzentrische Kreise, Ellipsen oder Ähnliches genutzt werden, um eine anisotrope Abstrahlung der geführten Welle zu erreichen.

### Bezugszeichenliste

- 1: Messeinrichtung
- 2: Erfassungseinrichtung
- 3: Messrohr
- 4: Innenraum
- 5: Schwingungswandler
- 6: Schwingungswandler
- 7: Pfeil
- 8: Pfeil
- 9: Seitenwand
- 10: Dicke
- 11: Pfeil
- 12: Seitenwand
- 13: Welle
- 14: Rayleigh-Winkel
- 15: Schwingungswandler
- 16: Schwingungswandler
- 17: Schalteinrichtung
- 18: Schalteinrichtung
- 19: piezoelektrisches Element
- 20: Elektrode
- 21: Elektrode
- 22: Zwischenschicht
- 23: Messanschluss
- 24: Messanschluss
- 25: Wellenlänge
- 26: Abstand
- 27: Mitte
- 28: Mitte
- 29: Schwingungswandler
- 30: Schwingungswandler
- 31: Schalter
- 32: Schwingungswandler
- 33: Schwingungswandler
- 34: Abstand
- 35: Untergruppe
- 36: Untergruppe

## Patentansprüche

1. Verfahren zur Ermittlung einer Messinformation mit einer Messeinrichtung (1), insbesondere mit einem Durchflussmesser, mit einem ein Fluid aufnehmenden und/oder von dem Fluid durchströmbaren Messrohr (3), wobei durch an einer Seitenwand (9) des Messrohrs (3) angeordnete erste Schwingungswandler (5, 6) zeitlich nacheinander in der Seitenwand (9) des Messrohrs (3) geführte erste und zweite Wellen angeregt und
- in einer ersten Alternative direkt in der Seitenwand (9) oder indirekt über das Fluid zu an der oder einer weiteren Seitenwand (12) des Messrohrs (3) angeordneten zweiten Schwingungswandlern (15, 16) geführt und dort zur Ermittlung von ersten Messdaten für die erste Welle und von zweiten Messdaten für die zweite Welle erfasst werden, wobei zur Erfassung eine erste und eine zweite Untergruppe (35, 36) der zweiten Schwingungswandler (5, 6) genutzt werden oder
- in einer zweiten Alternative entlang eines Ausbreitungspfades zurück zu den ersten Schwingungswandlern (5, 6) geführt und dort zur Ermittlung von ersten Messdaten für die erste Welle und von zweiten Messdaten für die zweite Welle erfasst werden, wobei zur Erfassung eine erste und eine zweite Untergruppe (35, 36) der ersten Schwingungswandler (5, 6) genutzt werden,
wobei in beiden Alternativen die Messinformation in Abhängigkeit der ersten und der zweiten Messdaten ermittelt wird oder wobei in beiden Alternativen die ersten Messdaten genutzt werden, um einen Parameter der Anregung der zweiten Welle zu bestimmen, und die Messinformation in Abhängigkeit der zweiten Messdaten ermittelt wird,
wobei zur Erfassung der ersten Messdaten Messsignale der ersten und zweiten Untergruppe (35, 36) zueinander addiert werden und zur Erfassung der zweiten Messdaten Messsignale der ersten und zweiten Untergruppe (35, 36) voneinander subtrahiert werden oder umgekehrt.

2. Verfahren nach Anspruch 1, **dadurch gekennzeichnet, dass** alle ersten Schwingungswandler (5, 6) zur Anregung der zweiten Welle mit einer gegenüber der zur Anregung der ersten Welle genutzten Polarität umgekehrten Polarität betrieben werden oder zur Anregung der ersten und der zweiten Welle voneinander unterschiedlich Untergruppen der ersten Schwingungswandler (5, 6) betrieben werden.

3. Verfahren nach Anspruch 1 oder 2, **dadurch gekennzeichnet, dass** als Messinformation eine Phasengeschwindigkeit und/oder eine Gruppengeschwindigkeit der ersten und/oder zweiten Welle, insbesondere in der Seitenwand (9), und/oder eine Temperatur des Messrohrs (3) und/oder des Fluids und/oder eine Sollfrequenz eines Ansteuersignals, das zum Betrieb der ersten Schwingungswandler (5, 6) im Rahmen einer Ermittlung einer das Fluid oder die Fluidströmung betreffenden Fluidinformation genutzt wird, ermittelt werden.

4. Verfahren nach einem der vorangehenden Ansprüche, **dadurch gekennzeichnet, dass** die Messinformation in Abhängigkeit von einer relativen Phasenlage jeweiliger als erste und zweite Messdaten erfasster Signalverläufe oder von einem anhand der Einhüllenden dieser Signalverläufe ermittelten Laufzeitunterschied zwischen der ersten und zweiten Welle ermittelt wird.

5. Verfahren nach Anspruch 3 und 4, **dadurch gekennzeichnet, dass** die Sollfrequenz bestimmt wird, indem eine Abweichung der relativen Phasenlage von einem Sollwert, insbesondere von 180°, durch Variation der Frequenz eines Ansteuersignals, das zum Betrieb der ersten Schwingungswandler (5, 6) zur Anregung der ersten und der zweiten Welle verwendet wird, minimiert wird.

6. Verfahren nach einem der vorangehenden Ansprüche, **dadurch gekennzeichnet, dass** die ersten Messdaten genutzt werden, um eine Anregungsfrequenz eines Anregungssignals für die ersten Schwingungswandler (5, 6) zur Anregung der zweiten Welle als den Parameter der Anregung zu bestimmen.

7. Verfahren nach Anspruch 6, **dadurch gekennzeichnet, dass** die Anregungsfrequenz bestimmt wird, indem durch Variation der Frequenz eines Ansteuersignals, das zum Betrieb der ersten Schwingungswandler (5, 6) zur Anregung der ersten Welle verwendet wird, eine Amplitude des oder eines als erste Messdaten über die ersten oder zweiten Schwingungswandler (15, 16) erfassten Signalverlaufs minimiert wird.

8. Verfahren nach einem der vorangehenden Ansprüche, **dadurch gekennzeichnet, dass** alle ersten Schwingungswandler (5, 6) mit einem gemeinsamen Ansteuersignal betrieben werden, wobei für zumindest einen Teil der ersten Schwingungswandler (5, 6) eine Polarität, mit der das Ansteuersignal dem jeweiligen Schwingungswandler (5, 6) zugeführt wird, durch eine Schalteinrichtung (17) umschaltbar ist.

9. Verfahren nach Anspruch 8, **dadurch gekennzeichnet, dass** die ersten Schwingungswandler (5, 6) jeweils zwei Elektroden (20, 21) aufweisen, durch deren Bestromung eine Schwingung des jeweiligen Schwingungswandlers (5, 6) ausgelöst wird, wobei die Elektroden (20, 21) durch die Schalteinrichtung (17) jeweils wahlweise mit einem ersten Potential, das insbesondere durch das Ansteuersignal bestimmt wird, und einem zweiten Potential, das insbesondere konstant ist, verbindbar sind.

10. Verfahren nach einem der vorangehenden Ansprüche, **dadurch gekennzeichnet, dass** die ersten und zweiten Messdaten durch eine Erfassungseinrichtung (2) über zwei Messanschlüsse (23, 24) erfasst werden, wobei zumindest einer der ersten oder zweiten Schwingungswandler (5, 6, 15, 16) zwei Elektroden (20, 21) aufweist, die über die oder eine weitere Schalteinrichtung (18) wahlfrei mit den Messanschlüssen (23, 24) koppelbar sind.

11. Messeinrichtung mit einem ein Fluid aufnehmenden und/oder von dem Fluid durchströmbaren Messrohr (3), an einer Seitenwand (9) des Messrohrs (3) angeordneten ersten Schwingungswandlern (5, 6) und einer Erfassungseinrichtung (2), **dadurch gekennzeichnet, dass** die Erfassungseinrichtung (2) dazu eingerichtet ist, das Verfahren nach einem der vorangehenden Ansprüche durchzuführen, indem sie die ersten Schwingungswandler (5, 6) zur Anregung der ersten und zweiten Welle ansteuert, die ersten und zweiten Messdaten in der zweiten Alternative über die ersten Schwingungswandler (5, 6) oder in der ersten Alternative über zweite Schwingungswandler (15, 16) der Messeinrichtung erfasst und die Messinformation ermittelt.

## Claims

1. Method for determining measurement information with a measuring device (1), in particular with a flow meter, having a measuring tube (3) which receives a fluid and/or through which the fluid can flow, wherein first and second waves conducted in the side wall (9) of the measuring tube (3) are excited in chronological succession by first oscillation transducers (5, 6) arranged on a side wall (9) of the measuring tube (3) and,
- in a first alternative, are conducted directly in the side wall (9) or indirectly through the fluid to second oscillation transducers (15, 16) arranged on the or a further side wall (12) of the measuring tube (3) and are recorded there in order to determine first measurement data for the first wave and second measurement data for the second wave, wherein a first and a second subgroup (35, 36) of the second oscillation transducers (5, 6) are used for the recording, or,
- in a second alternative, are conducted along a propagation path back to the first oscillation transducers (5, 6) and are recorded there in order to determine first measurement data for the first wave and second measurement data for the second wave, wherein a first and a second subgroup (35, 36) of the first oscillation transducers (5, 6) are used for the recording,
wherein, in both alternatives, the measurement information is determined as a function of the first and second measurement data, or wherein, in both alternatives, the first measurement data are used to determine a parameter of the excitation of the second wave and the measurement information is determined as a function of the second measurement data,
wherein, in order to record the first measurement data, measurement signals of the first and second subgroups (35, 36) are added together, and, in order to record the second measurement data, measurement signals of the first and second subgroups (35, 36) are subtracted from one another, or vice versa.

2. Method according to Claim 1, **characterized in that** all the first oscillation transducers (5, 6) are operated with a polarity reversed relative to the polarity used for the excitation of the first wave in order to excite the second wave or subgroups of the first oscillation transducers (5, 6) are operated differently from one another in order to excite the first and second waves.

3. Method according to Claim 1 or 2, **characterized in that** a phase velocity and/or a group velocity of the first and/or second wave, particularly in the side wall (9), and/or a temperature of the measuring tube (3) and/or of the fluid and/or a setpoint frequency of a drive signal, which is used to operate the first oscillation transducers (5, 6) in the scope of determining fluid information relating to the fluid or the fluid flow, is/are determined as measurement information.

4. Method according to one of the preceding claims, **characterized in that** the measurement information is determined as a function of a relative phase angle of respective signal profiles recorded as first and second measurement data, or of a time-offlight difference between the first and second waves which is determined with the aid of the envelopes of these signal profiles.

5. Method according to Claims 3 and 4, **characterized in that** the setpoint frequency is determined by minimizing a deviation of the relative phase angle from a setpoint value, in particular 180°, by varying the frequency of a drive signal which is used to operate the first oscillation transducers (5, 6) in order to excite the first and second waves.

6. Method according to one of the preceding claims, **characterized in that** the first measurement data are used to determine an excitation frequency of an excitation signal for the first oscillation transducers (5, 6) in order to excite the second wave as the parameter of the excitation.

7. Method according to Claim 6, **characterized in that** the excitation frequency is determined by minimizing an amplitude of the or a signal profile recorded as first measurement data by means of the first or second oscillation transducers (15, 16) by varying the frequency of a drive signal which is used to operate the first oscillation transducers (5, 6) in order to excite the first wave.

8. Method according to one of the preceding claims, **characterized in that** all the first oscillation transducers (5, 6) are operated with a common drive signal, wherein a polarity with which the drive signal is delivered to the respective oscillation transducer (5, 6) is switchable by a switching device (17) for at least some of the first oscillation transducers (5, 6).

9. Method according to Claim 8, **characterized in that** the first oscillation transducers (5, 6) respectively comprise two electrodes (20, 21), the energizing of which initiates an oscillation of the respective oscillation transducer (5, 6), wherein the electrodes (20, 21) are respectively connectable by the switching device (17) selectively to a first potential, which is in particular determined by the drive signal, and a second potential, which is in particular constant.

10. Method according to one of the preceding claims, **characterized in that** the first and second measurement data are recorded by a recording device (2) by means of two measuring terminals (23, 24), wherein at least one of the first or second oscillation transducers (5, 6, 15, 16) comprises two electrodes (20, 21) which can be coupled selectively to the measuring terminals (23, 24) by means of the or a further switching device (18).

11. Measuring device having a measuring tube (3) which receives a fluid and/or through which the fluid can flow, first oscillation transducers (5, 6) arranged on a side wall (9) of the measuring tube (3) and a recording device (2), **characterized in that** the recording device (2) is configured to carry out the method according to one of the preceding claims by driving the first oscillation transducers (5, 6) in order to excite the first and second waves, recording the first and second measurement data by means of the first oscillation transducers (5, 6) in the second alternative or by means of second oscillation transducers (15, 16) of the measuring device in the first alternative and determining the measurement information.

## Revendications

1. Procédé permettant de déterminer une information de mesure au moyen d'un dispositif de mesure (1), en particulier d'un débitmètre, comprenant un tube de mesure (3) recevant un fluide et/ou pouvant être traversé par le fluide, dans lequel des premières et secondes ondes guidées en succession temporelle dans une paroi latérale (9) du tube de mesure (3) sont excitées par des premiers transducteurs de vibrations (5, 6) disposés sur la paroi latérale (9) du tube de mesure (3), et
- dans une première variante, sont guidées directement dans la paroi latérale (9) ou indirectement par l'intermédiaire du fluide vers des seconds transducteurs de vibrations (15, 16) disposés sur la ou une autre paroi latérale (12) du tube de mesure (3) et y sont détectées afin de déterminer des premières données de mesure pour la première onde et des secondes données de mesure pour la seconde onde, dans lequel des premier et second sous-groupes (35, 36) des seconds transducteurs de vibrations (5, 6) sont utilisés pour la détection, ou
- dans une seconde variante, sont renvoyées le long d'un trajet de propagation vers les premiers transducteurs de vibrations (5, 6) et y sont détectées pour déterminer des premières données de mesure pour la première onde et des secondes données de mesure pour la seconde onde, dans lequel des premier et second sous-groupes (35, 36) des premiers transducteurs de vibrations (5, 6) sont utilisés pour la détection,
dans lequel, dans les deux variantes, l'information de mesure est déterminée en fonction des premières et des secondes données de mesure ou dans lequel, dans les deux variantes, les premières données de mesure sont utilisées pour déterminer un paramètre de l'excitation de la seconde onde, et l'information de mesure est déterminée en fonction des secondes données de mesure,
dans lequel des signaux de mesure des premier et second sous-groupes (35, 36) sont additionnés les uns aux autres pour la détection des premières données de mesure et des signaux de mesure des premier et second sous-groupes (35, 36) sont soustraits les uns des autres pour la détection des secondes données de mesure, ou inversement.

2. Procédé selon la revendication 1, **caractérisé en ce que** la totalité des premiers transducteurs de vibrations (5, 6) sont attaqués avec une polarité qui est inversée par rapport à la polarité utilisée pour l'excitation de la première onde ou des sous-groupes, différents les uns des autres, des premiers transducteurs de vibrations (5, 6) sont attaqués pour l'excitation de la première onde et de la seconde onde.

3. Procédé selon la revendication 1 ou 2, **caractérisé en ce qu'**une vitesse de phase et/ou une vitesse de groupe de la première et/ou de la seconde onde, en particulier dans la paroi latérale (9), et/ou une température du tube de mesure (3) et/ou du fluide et/ou une fréquence de consigne d'un signal de commande qui est utilisé pour faire fonctionner les premiers transducteurs de vibrations (5, 6) dans le cadre de la détermination d'une information de fluide concernant le fluide ou l'écoulement de fluide sont déterminées en tant qu'information de mesure.

4. Procédé selon l'une quelconque des revendications précédentes, **caractérisé en ce que** l'information de mesure est déterminée en fonction d'une position de phase relative de formes d'onde de signal respectives détectées en tant que premières et secondes données de mesure ou d'une différence de temps de propagation entre les première et seconde ondes, déterminée sur la base des enveloppes de ces formes d'onde de signal.

5. Procédé selon les revendications 3 et 4, **caractérisé en ce que** la fréquence de consigne est déterminée en minimisant un écart de la position de phase relative par rapport à une valeur de consigne, en particulier de 180°, en faisant varier la fréquence d'un signal de commande utilisé pour faire fonctionner les premiers transducteurs de vibrations (5, 6) pour l'excitation de la première et de la seconde onde.

6. Procédé selon l'une quelconque des revendications précédentes, **caractérisé en ce que** les premières données de mesure sont utilisées pour déterminer une fréquence d'excitation d'un signal d'excitation destiné aux premiers transducteurs de vibrations (5, 6) pour l'excitation de la seconde onde en tant que paramètre de l'excitation.

7. Procédé selon la revendication 6, **caractérisé en ce que** la fréquence d'excitation est déterminée en minimisant une amplitude de la ou d'une forme d'onde détectée en tant que premières données de mesure par l'intermédiaire des premier ou second transducteurs de vibrations (15, 16) en faisant varier une fréquence d'un signal de commande utilisé pour commander les premiers transducteurs de vibrations (5, 6) pour l'excitation de la première onde.

8. Procédé selon l'une quelconque des revendications précédentes, **caractérisé en ce que** la totalité des premiers transducteurs de vibrations (5, 6) sont attaqués par un signal de commande commun, dans lequel, pour au moins une partie des premiers transducteurs de vibrations (5, 6), une polarité avec laquelle le signal de commande est fourni au transducteur de vibrations (5, 6) respectif peut être commutée par un dispositif de commutation (17).

9. Procédé selon la revendication 8, **caractérisé en ce que** les premiers transducteurs de vibrations (5, 6) comportent chacun deux électrodes (20, 21) dont l'excitation déclenche une vibration du transducteur de vibrations (5, 6) respectif, dans lequel les électrodes (20, 21) peuvent chacune être connectées sélectivement par le dispositif de commutation (17) à un premier potentiel, qui est déterminé en particulier par le signal de commande, et à un second potentiel, qui est en particulier constant.

10. Procédé selon l'une quelconque des revendications précédentes, **caractérisé en ce que** les premières et secondes données de mesure sont acquises par un dispositif d'acquisition (2) par l'intermédiaire de deux bornes de mesure (23, 24), dans lequel au moins l'un des premiers ou seconds transducteurs de vibrations (5, 6, 15, 16) présente deux électrodes (20, 21) qui peuvent être facultativement couplées aux bornes de mesure (23, 24) par l'intermédiaire du ou d'un autre dispositif de commutation (18).

11. Dispositif de mesure comprenant un tube de mesure (3) recevant un fluide et/ou pouvant être traversé par le fluide, des premiers transducteurs de vibrations (5, 6) disposés sur une paroi latérale (9) du tube de mesure (3) et un dispositif de détection (2), **caractérisé en ce que** le dispositif de détection (2) est configuré pour mettre en œuvre le procédé selon l'une quelconque des revendications précédentes en commandant les premiers transducteurs de vibrations (5, 6) pour exciter les premières et secondes ondes, en détectant les premières et secondes données de mesure dans la seconde variante par l'intermédiaire des premiers transducteurs de vibrations (5, 6) ou dans la première variante par l'intermédiaire des seconds transducteurs de vibrations (15, 16) du dispositif de mesure et en déterminant l'information de mesure.
